(19) Europäisches Patentamt
European Patent Office
Office européen des brevets

(11) EP 0 842 114 B1

(12) **FASCICULE DE BREVET EUROPEEN**

(45) Date de publication et mention
de la délivrance du brevet:
**31.03.1999 Bulletin 1999/13**

(21) Numéro de dépôt: 96927116.2

(22) Date de dépôt: 31.07.1996

(51) Int. Cl.$^6$: **C01B 39/06**, C01B 39/08,
C01B 39/20, C01B 39/46,
C01B 39/26, B01J 29/89

(86) Numéro de dépôt international:
**PCT/FR96/01209**

(87) Numéro de publication internationale:
**WO 97/05060 (13.02.1997 Gazette 1997/08)**

(54) **PROCEDE D'OBTENTION DE ZEOLITHES AU TITANE INSERE DANS LE RESEAU ET APPLICATION**

VERFAHREN ZUR HERSTELLUNG VON ZEOLITHEN MIT INS GITTER EINGELAGERTEM TITAN UND DEREN VERWENDUNG

METHOD FOR PREPARING LATTICE-INSERTED TITANIUM ZEOLITES, AND USE THEREOF

(84) Etats contractants désignés:
**BE CH DE DK ES GB IT LI NL**

(30) Priorité: **02.08.1995 FR 9509436**

(43) Date de publication de la demande:
**20.05.1998 Bulletin 1998/21**

(73) Titulaire: **ELF AQUITAINE**
**92400 Courbevoie (FR)**

(72) Inventeurs:
• **DI RENZO, Francesco**
**Résidence Les Cèdres - BC**
**F-34000 Montpellier (FR)**
• **GOMEZ, Sylvie**
**F-34140 Mèze (FR)**
• **FAJULA, François**
**F-34820 Teyran (FR)**
• **TEISSIER, Rémy**
**F-69340 Francheville (FR)**

(74) Mandataire: **Boillot, Marc**
**Elf Exploration Production**
**Département Propriété Industrielle**
**Tour Elf**
**EP/T/RD/DPI - Bureau 34 G 47**
**92078 Paris La Défense Cedex (FR)**

(56) Documents cités:
**FR-A- 2 694 549**

• **P. J. KOOYMAN ET AL.: "Proceedings from the Ninth International Zeolite Conference Montreal 1992 Volume 1" 1993 , BUTTERWORTH-HEINEMANN , BOSTON, US XP002002471 cité dans la demande voir page 505 - page 512**

## Description

La présente invention vise un procédé d'obtention de zéolithes au titane inséré dans le réseau à partir de zéolithes, avec ou sans titane, synthétisées ou commerciales. Elle vise plus particulièrement l'obtention de zéolithes au titane inséré dans le réseau utilisables dans les catalyseurs d'oxydation ménagée des molécules organiques en présence d'eau oxygénée et d'hydroperoxydes, l'amélioration de l'insertion du titane et l'élimination du titane extra-réseau favorisant un accroissement de l'activité, de la stabilité et de l'efficacité de ces catalyseurs.

Parmi les zéolithes au titane synthétisées, la plus étudiée est la titanosilicalite TS-1, de type structural MFI décrite dans le brevet américain nr 4.410.501, dont les applications catalytiques couvrent entre autres l'hydroxylation d'aromatiques, l'époxydation d'oléfines, l'oxydation des paraffines et des alcools à cétones, et l'ammoximation de la cyclohexanone par l'ammoniaque. Les études sur ce solide ont clairement montré que les propriétés catalytiques des zéolithes au titane sont strictement liées à la méthode de préparation du catalyseur. En effet, si on obtient des titanosilicates non cristallins ou de l'oxyde de titane massif au lieu de cristaux de titanosilicalite, les réactions d'oxydation ménagée obtenues en leur présence sont moins sélectives et moins efficaces. Par ailleurs, on sait que l'efficacité des catalyseurs dépend du taux d'insertion des métaux de transition dans la charpente silicique de la zéolithe.

Préparer des zéolithes au titane efficaces en catalyse est particulièrement délicat car, sans respect des conditions optimales de synthèse, l'oxyde de titane coprécipite avec des titanosilicates non cristallins. La précipitation de ces phases non poreuses favorise l'appauvrissement de la zéolithe en titane, diminue la sélectivité et l'efficacité des catalyseurs d'oxydation puisqu'elle Privilégie la décomposition de l'eau oxygénée.

Pour éviter cette coprécipitation particulièrement gênante en cours de synthèse, on préfère utiliser des réactifs purifiés, exempts de cations alcalins (voir demande de brevet français 94/00978 du 28 janvier 1994), parfois en présence du peroxyde d'hydrogène (voir demande de brevet WO 94/02245), ce qui accroît considérablement le coût global de la synthèse.

Comme il est souvent difficile de maîtriser ou de reproduire ces synthèses, des méthodes de traitement post-synthèse des zéolithes exemptes de titane ont été développées en vue d'insérer du titane ou tout autre métal de transition dans leur charpente.

Parmi les différents traitements post-synthèses publiés, on s'est aperçu qu'en traitant les zéolithes protoniques de type MFI, faujasite ou BEA, par des vapeurs de $TiCl_4$, une partie de l'aluminium contenu dans la charpente était extraite sous forme $AlCl_3$ vapeur et remplacée par du titane (B.Kraushaar et J.Van Hoof, Catalysis Letters 1, 1988, 81). Cependant, toutes ces vapeurs étant corrosives, ce traitement post-synthèse ne peut être valablement et facilement mis en oeuvre à l'échelle industrielle. Pour contourner cet inconvénient majeur, des traitements aux halogénures de titane en solution ont été étudiés: J.Kooyman, J.C.Jansen et H.Van Bekkum dans Proceedings of 9th International Zéolite Conference, Montreal 1992, Butterworth-Heinemann 1993, volume 1,505, ont notamment traité les zéolithes MFI par des solutions de $TiF_3$ en présence d'acide fluorhydrique (HF) dilué. D'autres encore ont traité la zéolithe bêta par des solutions de $TiF_3$ en solution dans de l'acide chlorhydrique dilué (voir demande de brevet français 2.694.549 (Plee, Nicolas). Les zéolithes obtenues par ces méthodes ne semblent pas suffisamment actives en oxydation.

D'autres chercheurs ont préféré traiter les zéolithes riches en aluminium telles que la faujasite, la LTL, la mazzite, la MER, la MFI et la mordénite, par une solution aqueuse de $(NH_4)_2TiF_6$ comme dans la demande de brevet WO 85/04854.

Cependant, on a constaté que la quantité d'aluminium présente dans la charpente demeurait encore importante, que la majeure partie du titane apparaissait sous forme d'oxyde de titane extra-réseau et enfin, que les zéolithes obtenues n'étaient pas adaptées à la catalyse des réactions d'oxydation ménagée. Cette inadéquation des zéolithes est aussi pour partie liée à la présence de sites acides, notamment à la présence d'atomes d'aluminium dans la charpente silicique.

Pour limiter voire éliminer la présence de titane extra-réseau c'est-à-dire non inséré dans la charpente zéolithique, et celle de sites acides, la présente invention vise l'obtention de zéolithes au titane inséré dans le réseau, par un traitement simple et exploitable industriellement. Ce traitement est un traitement post-synthèse de zéolithes avec ou sans titane, les atomes de titane étant pour partie disposés en surface ou partiellement insérés dans la charpente, qui permet soit de limiter les étapes de synthèse, soit d'améliorer notablement la sélectivité et l'activité du catalyseur comprenant la zéolithe au regard des réactions d'oxydation ménagée. En outre, ce traitement post-synthèse vise l'obtention de zéolithes au titane de plus grande stabilité et de cristallinité plus élevée, même en milieu fortement acide.

La présente invention a donc pour objet un procédé d'obtention de zéolithe au titane entièrement inséré dans le réseau comprenant un traitement post-synthèse par un acide minéral de la zéolithe synthétisée avec ou sans titane caractérisé en ce que ledit traitement post-synthèse consiste à traiter la dite zéolithe en présence d'au moins une source de titane, par une solution contenant au moins un acide minéral oxydant dont le potentiel d'oxydo-réduction est supérieur à celui du titane tétravalent en solution acide.

Pour le procédé selon l'invention, la source soluble de titane est choisie dans le groupe constitué par les sources organiques et minérales de titane de solubilité supérieure aux zéolithes terminales.

Dans une forme préférée du procédé, la source est soit une zéolithe au titane commerciale ou non, soit un sel de titane, la combinaison de ces deux sources n'étant pas exclue.

En effet, une première source soluble de titane selon l'invention correspond aux oxydes et aux métallosilicates amorphes disposés à la surface de la zéolithe lors de la synthèse en présence de titane. Le titane extra-réseau est dissout par l'acide oxydant, puis introduit dans la charpente de la zéolithe de laquelle sont simultanément extraits les atomes d'aluminium.

Une deuxième source soluble de titane peut provenir de solutions aqueuses préformées soit dans la solution acide, soit dans une solution séparée de la dite solution acide avec laquelle elle est ultérieurement mélangée. La zéolithe traitée peut être une zéolithe synthétisée en présence de titane ou une zéolithe sans titane. En effet, cette deuxième source peut être combinée éventuellement avec la première source pour une insertion du titane. On favorise la dissolution du titane amorphe disposé en surface de la zéolithe pour son insertion dans la charpente, le titane de la solution préformée permettant de compléter la quantité de titane nécessaire pour remplir tous les sites disponibles de la zéolithe, leur nombre étant limité par la structure propre de la zéolithe de départ. Il y a équilibrage des concentrations en solution au fur et à mesure de l'insertion de titane dans le réseau de la zéolithe. Toute source de titane au degré d'oxydation inférieur ou égal à quatre peut être utilisée.

Les sources de titane solubles préférées des solutions préformées comprennent au moins un sel de titane du groupe constitué par l'alkoxyde de titane, les nitrates, les sulfates, les phosphates, les perchlorates, les halogénures de titane, le dioxyde de titane et le titanosilicate.

Pour mettre en oeuvre la présente invention, l'acide minéral oxydant est choisi de préférence dans le groupe constitué par l'acide nitrique, l'acide fluorosulfonique et l'acide perchlorique; ces acides peuvent être remplacés par les anhydrides correspondant, pris seuls ou en mélange.

On a constaté que l'utilisation sélective de ces acides minéraux oxydants de potentiel d'oxydo-réduction supérieur ou égal à celui du titane tétravalent en solution acide permettait non seulement de désaluminer la zéolithe mais favorisait le remplacement d'atomes d'aluminium par des atomes de titane dans la charpente ce qui était inattendu dans l'état actuel des connaissances de l'homme du métier, les atomes de silicium remplaçant généralement les atomes d'aluminium au cours d'une désalumination classique par attaque acide. Cette insertion de titane dans les défauts réticulaires de la zéolithe suite au départ de l'aluminium est d'autant plus surprenant que bien qu'il s'agisse également d'un métal de structure tétravalente, les atomes de titane sont beaucoup plus gros que les atomes de silicium. En outre, la stabilité des zéolithes ainsi échangées au titane présente une plus grande stabilité en milieu acide très concentré et une plus grande cristallinité.

Une explication possible de l'efficacité des acides oxydants pour l'insertion du titane dans le réseau des zéolithes est basée sur le potentiel d'oxydo-réduction du titane en solution aqueuse. Les espèces oxydées contenant du titane tétravalent ont un potentiel rédox positif, donc supérieur au potentiel de l'électrode à hydrogène. Il en résulte que le titane tétravalent en solution peut être réduit par le proton d'une solution acide mais, sous forme réduite, il S'insère moins bien dans la charpente d'une zéolithe. Cette explication ne se veut pas limitative des propriétés des acides oxydants, cependant elle peut aider à comprendre la faible efficacité constaté des acides réducteurs, tel que l'acide chlorhydrique 1,3M utilisé dans l'exemple 3 de la demande WO 94/02245. Celle-ci décrit un traitement post-synthèse de la zéolithe bêta au titane pour améliorer son activité dans la catalyse d'oxydation du n-hexane et du cyclohexane avec comme alternatives équivalentes des traitements par une base minérale ou de la vapeur d'eau.

De plus, le traitement post-synthèse selon l'invention s'applique quel que soit le mode de synthèse des zéolithes avec une efficacité identique. Il s'adapte à toutes les zéolithes, qu'elles contiennent ou non du titane dans leur charpente préalablement au traitement post-synthèse.

Dans un mode particulier de réalisation de l'invention, lorsque le rapport Si/Al est faible, c'est-à-dire inférieur à 5 dans la zéolithe, il est préférable d'inclure une étape de désalumination pour augmenter ce rapport et éviter ainsi tout risque de dissolution de la zéolithe traitée, cette étape de désalumination pouvant précéder ou se produire conjointement au traitement post-synthèse.

Ainsi, dans une forme préférée de l'invention, la solution contenant au moins un acide oxydant, peut également contenir un acide minéral ou organique réducteur, de potentiel oxydant inférieur au potentiel réducteur du ou des protons qu'ils comportent vis-à-vis du titane, ces acides privilégiant l'extraction d'atomes d'aluminium et leur remplacement par des atomes de silicium dans la charpente zéolithique.

Parmi les acides réducteurs et désaluminants préférés , on peut citer l'acide chlorhydrique, l'acide phosphorique et les acides carboxyliques.

De même, dans une autre forme de mise en oeuvre, on peut imaginer sans sortir du cadre de la présente invention, une alternance d'étapes de désalumination et de traitement post-synthèse, en préparant des solutions séparées de ces acides réducteurs et des acides oxydants.

Lorsque le rapport Si/Al est supérieur à 5, le traitement post-synthèse selon l'invention peut être appliqué directement sur la zéolithe de synthèse, la désalumination étant conjointe à l'insertion de titane dans la charpente, la quantité d'atomes de silicium étant suffisante pour maintenir celle-ci rigide. L'utilisation de solutions communes d'acides oxydants et réducteurs permet d'accélérer le processus d'insertion de titane dans la charpente zéolitique.

Un second objet de l'invention est l'application du procédé d'obtention de zéolithes au titane entièrement inséré dans le réseau à l'obtention de faujasites, de zéolithes bêta, de mordenite et d'EMT au titane.

Un troisième objet de l'invention concerne les zéolithes au titane inséré dans le réseau obtenues par le procédé de l'invention.

Un quatrième objet de l'invention est l'utilisation de ces zéolithes au titane inséré dans le réseau dans les catalyseurs d'oxydation de composés hydrocarbonés en présence de peroxyde d'hydrogène de préférence aux peroxydes organiques ou minéraux usuellement utilisés comme le persulfate de potassium ou l'hydropéroxyde de butyle, plus coûteux et nocifs pour l'environnement. De façon évidente, ces zéolithes peuvent être utilisées en tant que telles dans les catalyseurs d'oxydation ou après dépôt d'autres métaux.

Afin d'illustrer l'invention, des exemples sont donnés ci-après à titre illustratif mais non limitatif.

EXEMPLE 1 :

Le présent exemple vise à souligner la spécificité inattendue des acides dits oxydants pour insérer le titane dans le réseau de la zéolithe en comparaison d'acides dits réducteurs.

Cinq échantillons du même lot de zéolithe bêta de rapport Si/Al=19 ont été traités par des solutions d'acides différents. Pour chaque traitement, 5 g de zéolithe et 0,25 ml de tétrabutoxyde de titane ont été agités pendant une nuit dans un ballon en Pyrex (marque déposée) contenant 500 ml de solution acide à température de reflux A la fin du traitement, le solide a été récupéré par filtration, lavé jusqu'à neutralité de l'eau de lavage et séché à l'air à 80°C. Les types d'acide et la concentration des solutions utilisées, ainsi que le rapport Ti/Si du solide traité sont donnés dans le tableau 1. A titre indicatif, les potentiels standard de réduction de l'anion de l'acide utilisé sont aussi portés dans ce tableau.

Tableau 1

| Solution de traitement | Ti/Si final | E°N |
|---|---|---|
| $HClO_4$ 10M | 0.010 | + 1.189 |
| $HNO_3$ 16M | 0.010 | + 0.934 |
| H2SO4 14M | 0.001 | + 0.172 |
| H3PO4 15M | 0.000 | - 0.276 |
| HCl 11M | 0.003 | ......... |

Pour observer l'influence de l'état du titane dans le solide sur les propriétés catalytiques de la zéolithe, l'influence de son degré de dispersion ou son état de coordination, plusieurs méthodes spectroscopiques et cristallographiques ont été proposées. La méthode qui permet le mieux une caractérisation directe de l'état du titane dans les titanosilicates est la spectroscopie de réflexion diffuse dans l'ultraviolet. Dans le cadre de ce brevet, on accepte une définition opérative du titane tétraédrique de réseau comme l'espèce ou les espèces correspondant à une bande de maximum d'absorption à $48000 \pm 2000$ cm$^{-1}$. D'autres interprétations données à cette bande ne sauraient pas altérer la correspondance observée entre la présence de la bande et les bonnes propriétés catalytiques des solides.

Dans le présent exemple, les spectres de réflexion diffuse dans l'ultraviolet dès zéolithes traitées à l'acide nitrique et à l'acide perchlorique montrent une seule bande intense avec un maximum à 48000 cm$^{-1}$. Le spectre de la zéolithe traitée à l'acide sulfurique présente deux bandes de faible intensité avec des maxima à 33000 et 42000 cm$^{-1}$. La zéolithe traitée à l'acide chlorhydrique présente deux bandes de faible intensité à 47000 et 42000 cm$^{-1}$ et une absorption très faible entre 30000 et 35000 cm$^{-1}$.

On constate que les traitements à l'acide nitrique et perchlorique sont les seuls qui permettent une incorporation presque quantitative du titane dans la zéolithe et cela sous la forme de titane tétraédrique de réseau, correspondant à la bande d'absorption à 48000 cm$^{-1}$. Parmi les acides utilisés, l'acide perchlorique et l'acide nitrique sont les seuls à présenter un potentiel standard d'oxydo-réduction nettement supérieur à celui des espèces contenant du titane tétravalent, qui ont un potentiel de réduction pouvant atteindre +0,25 V.

Par contre, tous les acides essayés se sont avérés satisfaisant du point de vue de la désalumination de la zéolithe, le rapport Si/Al de toutes les zéolithes après traitement étant supérieur à 500.

EXEMPLE 2 :

Cet exemple vise à montrer qu'indépendamment de la méthode de synthèse utilisée, le traitement post-synthèse de l'invention permet l'obtention de zéolithe au titane plus efficace au regard des réactions d'oxydation ménagées, notamment les réactions d'époxydation du cyclohèxène dans le diglyme.

A cet effet, plusieurs échantillons de zéolithes ont été préparés, d'autres sont des zéolithes commerciales mais toutes ont subi un traitement post-synthèse selon l'invention.

Une première zéolithe traitée, ci-après référencée ZT1, a été obtenue en mélangeant 5 g de zéolithe bêta de composition $8.3TEAO_2.6Al_2O_3$ $100SiO_2$ à 0,175 ml de titanium tétrabutoxyde et 500 ml d'acide nitrique 16M. Le mélange est agité pour 16 heures à température de reflux. La phase solide est séparée par filtration et lavée, d'abord, avec 200 ml d'acide nitrique 8 M et, ensuite avec eau désionisée jusqu'à neutralité. Le solide est ensuite séché à 80°C. La zéolithe ainsi traitée a un rapport Ti/Si=0.07 et un rapport Si/Al<1000. A la spectroscopie de réflexion diffuse dans l'ultraviolet, le solide présente une seule bande intense à 48000 cm$^{-1}$, typique du titane en coordination tétraédrique dans la zéolithe.

Une deuxième zéolithe bêta au titane, ci-après référencée $Z_2$, a été préparée à partir d'un gel de composition ($9.6$ $Na_2O$, 30 $TEA_2O$, 0.2 $Al_2O_3$, 17 $B_2O_3$, 1.7 $TiO_2$, $100SiO_2$, 2000 $H_2O$), où TEA correspond au cation tétraéthylammonium, le gel étant ultérieurement traité hydrothermiquement à 150°C sous pression autogène. La zéolithe $Z_2$ ainsi obtenue, observée par spectroscopie de réflexion diffuse, présente une bande à 48000cm$^{-1}$, typique du titane en coordination tétraédrique dans la zéolithe, et une épaule à 37000cm$^{-1}$, caractéristique des titanosilicalites non cristallins. L'observation par microscopie électronique à balayage a confirmé la présence dans l'échantillon de traces de phase amorphe, à côté de la zéolithe Bêta. L'analyse ponctuelle par microsonde EDAX a permis de montrer que la zéolithe $Z_1$ possèdait des rapports Si/Al=170 et le titanosilicalite amorphe un rapport Si/Ti=3.

Le traitement post-synthèse consiste à prendre 5g de $Z_2$, de les mélanger à 500ml d'acide nitrique 12M et de maintenir le mélange sous agitation à température de reflux pendant six heures. Le mélange est ensuite filtré, la phase solide récupérée est lavée jusqu'à la neutralité des eaux de lavage, et séchée à 80°C. La zéolithe $ZT_2$ récupérée, dont le diffractogramme est toujours caractéristique d'une zéolithe bêta, présente une bande à 48000 cm$^{-1}$ sans aucun épaulement à la spectroscopie diffuse dans l'ultraviolet. L'analyse par microsonde EDAX et l'analyse élémentaire concordent sur la composition de l'échantillon, qui présente un rapport Si/Ti=90. Le volume microporeux du solide, mesuré par adsorption de n-hexane à P/P=0,12 après dégazage à 200°C, est de 0,16 ml/g.

Une troisième zéolithe $Z_3$ est obtenue à partir de 25g de faujasite commerciale désaluminée de rapport Si/Al=18.4, mélangés avec 750 $\mu$l de tétrabutoxyde de titane et 2.5 litres d'acide nitrique 16M. Le mélange est agité à température de reflux pendant 16 heures puis, la phase solide est récupérée par filtration, lavée jusqu'à neutralité de la solution de lavage et séchée à 80°C. Le solide $ZT_3$ ainsi récupéré présente le diffractogramme typique de la faujasite sans aucune perte de cristallinité par rapport à la zéolithe de départ. Sur la base de l'adsorption d'azote à 77 K, le solide traité présente un volume microporeux de 0.26 ml/g. En spectroscopie de réflexion diffuse dans l'ultraviolet, $ZT_3$ présente une bande à 48000 cm-1 sans aucun épaulement caractéristique de titane octaédrique dans la charpente, de titanosilicates amorphe ou d'oxyde de titane.

Ces différentes zéolithes, de $ZT_1$ à $ZT_3$ ont été testées dans les réactions d'époxydation du cyclohèxène

Les tests d'oxydation consistent à introduire dans un réacteur agité thermostaté muni d'un condenseur à reflux et d'un dispositif d'introduction de réactif :

- 26 grammes de diglyme
- 41 grammes de cyclohexène (0,5 moles)
- 2,5 grammes de catalyseur solide, $ZT_x$

On porte ce mélange sous agitation à une température de 80°C qui est maintenue durant toute la durée du test. On coule en une demi-heure 1,26 grammes de $H_2O_2$ à 70 % (0,026 moles) dilué dans 10 grammes de diglyme. La réaction dure une heure et demie. L'eau oxygénée résiduelle est dosée par la méthode classique à l'iode libérée par traitement au KI acide.

Parallèlement, on dose par chromatographie en phase gazeuse l'oxyde de cyclohexène et le cyclohexane diol.

Pratiquement, on utilise un chromatographe en phase gazeuse HP 5890 avec détection catharométrique comportant une colonne de verre de 2 m de diamètre compris entre 4 et 6 mm, remplie de chromosorb W avec 5% de carbowax, les températures d'injection et de détection étant respectivement de 220°C et 250°C.

Dans le tableau 2 ci-après, on a rassemblé les résultats obtenus avec ces trois zéolithes ($ZT_1$ à $ZT_3$) et la zéolithe $Z_2$ avant traitement.

Dans ce tableau, TTG($H_2O_2$) correspond à la conversion du péroxyde d'hydrogène, soit au rapport suivant:

$$TTG(H_2O_2) = \frac{\text{nombre moles de } (H_2O_2) \text{ consommées X 100}}{\text{nombre moles de } (H_2O_2) \text{ introduites.}}$$

Les sélectivités en composés époxydés obtenus et en diol sont calculées de la façon suivante :

$$\text{Sel époxy} = \frac{\text{nombre moles d'époxyde formé X 100}}{\text{nombre moles de } (H_2O_2) \text{ consommées}}$$

et

$$\text{Sel diol} = \frac{\text{nombre moles de diol formé X 100}}{\text{nombre moles de } (H_2O_2) \text{ consommées}}$$

Tableau 2

| Catalyseur | TTG $H_2O_2$ (%) | Select époxyde (%) | Select diol (%) |
|---|---|---|---|
| ZT1 | 84 % | 74 % | 14 % |
| Z2 | 92 % | 6 % | 22 % |
| ZT2 | 92 % | 43 % | 9 % |
| ZT3 | 100 % | 20 % | 46 % |

On constate par rapport à la zéolithe ZT1, que le titane inséré dans la structure d'une zéolithe Bêta désaluminée est très sélective pour l'obtention d'oxyde de cyclohexène ou époxyde correspondant.

Si on compare les résultats obtenus avec la zéolithe Z2 (sans traitement post-synthèse) qui décompose le peroxyde d'hydrogène, et la zéolithe ZT2 (après traitement post-synthèse), on observe une nette augmentation de la sélectivité totale en produit d'oxydation avec cette dernière, mais une diminution sensible de la sélectivité en diol correspondant à une diminution de son acidité.

Avec la zéolithe ZT3, on confirme l'efficacité du traitement post-synthèse selon l'invention sur d'autres structures zéolithiques que la zéolithe Bêta. Ici, la forte sélectivité en diol provient de la désalumination incomplète de la structure faujasite, riche en aluminium.

**Revendications**

1.  Procédé d'obtention de zéolithe au titane entièrement inséré dans le réseau comprenant un traitement post-synthèse par un acide minéral de la zéolithe synthétisée avec ou sans titane caractérisé en ce que ledit traitement post-synthèse consiste à traiter la dite zéolithe en présence d'au moins une source de titane, par une solution contenant au moins un acide minéral oxydant dont le potentiel d'oxydo-réduction est supérieur à celui du titane tétravalent en solution acide.

2.  Procédé selon la revendication 1 caractérisé en ce que la source de titane est soit une zéolithe au titane soit un sel de titane en solution, éventuellement les deux.

3.  Procédé selon les revendications 1 à 2 caractérisé en ce que une première source soluble de titane correspond aux oxydes ou aux métallosilicates amorphes disposés à la surface de la zéolithe au titane synthétisée.

4.  Procédé selon les revendications 1 à 3 caractérisé en ce que une deuxième source soluble de titane provient de solutions préformées dans l'eau ou dans la solution d'acide.

5.  Procédé selon les revendications 1 à 4 caractérisé en ce que la deuxième source de titane dans la solution préformée correspond à au moins un sel de titane du groupe constitué par l'alkoxyde, le nitrate, le sulfate, le phosphate, le perchlorate et les halogénures de titane, le dioxyde de titane et les titanosilicates.

6.  Procédé selon les revendications de 1 à 5 caractérisé en ce que le dit acide oxydant est choisi dans le groupe constitué par les acides nitrique, perchlorique et fluorosulfonique, pris seuls ou en mélange.

**7.** Procédé selon les revendications 1 à 6 caractérisé en ce que le dit acide est couplé avec un acide réducteur minéral ou organique de potentiel d'oxydo-réduction inférieur ou égal à celui du titane tétravalent en solution acide.

**8.** Procédé selon les revendications de 1 à 7 caractérisé en ce que le dit acide réducteur est choisi dans le groupe constitué par les acides minéraux tels que l'acide chlorhydrique, l'acide phosphorique, et les acides carboxyliques.

**9.** Application du procédé selon les revendications de 1 à 8 à la préparation de tous types de zéolithes au titane entièrement inséré dans le réseau et de préférence à la préparation de faujasites, de zéolithes bêta, de mordénites et d'EMT au titane.

**10.** Zéolithes obtenues par application du procédé selon les revendications 1 à 9.

**11.** Utilisation des zéolithes selon la revendication 10 dans la composition de catalyseurs d'oxydation ménagée.

**Claims**

**1.** Process for the preparation of zeolite containing titanium inserted entirely in the lattice, comprising a post-synthesis treatment, with a mineral acid, of the zeolite synthesized with or without titanium, characterised in that the post-synthesis treatment consists in treating the zeolite in the presence of at least one titanium source with a solution containing at least one oxidising mineral acid of which the redox potential is higher than that of tetravalent titanium in acid solution.

**2.** Process according to claim 1, characterised in that the titanium source is either a titanium-containing zeolite or a titanium salt in solution, optionally both.

**3.** Process according to claims 1 to 2, characterised in that a first soluble titanium source corresponds to the oxides or the amorphous metallosilicates located at the surface of the synthesised titanium-containing zeolite.

**4.** Process according to claims 1 to 3, characterised in that a second soluble titanium source is derived from preformed solutions in water or in acid solution.

**5.** Process according to claims 1 to 4, characterised in that the second titanium source in the preformed solution corresponds to at least one titanium salt from the group constituted by the alkoxide, the nitrate, the sulphate, the phosphate, the perchlorate and the halides of titanium, titanium dioxide and the titanosilicates.

**6.** Process according to claims 1 to 5, characterised in that the oxidising acid is selected from the group constituted by nitric acid, perchloric acid and fluorosulphonic acid, alone or in admixture.

**7.** Process according to claims 1 to 6, characterised in that the acid is coupled with a mineral or organic reducing acid having a redox potential lower than or equal to that of tetravalent titanium in acid solution.

**8.** Process according to claims 1 to 7, characterised in that the reducing acid is selected from the group constituted by mineral acids such as hydrochloric acid, phosphoric acid, and carboxylic acids.

**9.** Application of the process according to claims 1 to 8 to the preparation of all types of zeolites containing titanium inserted entirely in the lattice and preferably to The preparation of faujasites, beta zeolites, mordenites and EMT containing titanium.

**10.** Zeolites prepared by the application of the process according to claims 1 to 9.

**11.** Use or the zeolites according to claim 10 in the composition of catalysts of controlled oxidation.

**Patentansprüche**

**1.** Verfahren zur Herstellung von Zeolithen mit ins Gitter eingelagertem Titan, wobei das Verfahren eine Postsynthesebehandlung des mit oder ohne Titan synthetisierten Zeoliths mit einer Mineralsäure umfaßt, dadurch **gekennzeichnet,** daß die Postsynthesebehandlung in der Behandlung des Zeoliths in Anwesenheit Wenigstens einer Titanquelle mit einer Losung besteht, die wenigstens eine oxidierende Mineralsäure enthält, deren Redoxpotential über dem des in saurer Lösung vorliegenden vierwertigen Titans liegt.

2. Verfahren nach Anspruch 1, dadurch **gekennzeichnet**, daß die Titanquelle ein Titanzeolith oder ein in Lösung befindliches Titansalz oder auch beides ist.

3. Verfahren nach den Ansprüchen 1 und 2, dadurch **gekennzeichnet**, daß eine erste lösliche Titanquelle den auf der Oberfläche des synthetisierten Titanzeoliths verteilten Oxiden oder amorphen Metallsilikaten entspricht.

4. Verfahren nach den Ansprüchen 1 bis 3, dadurch **gekennzeichnet**, daß eine zweite lösliche Titanquelle aus vorgängig in Wasser oder in der Säurelösung gebildeten Lösungen stammt.

5. Verfahren nach den Ansprüchen 1 bis 4, dadurch **gekennzeichnet**, daß die zweite Titanquelle in der Vorgängig gebildeten Lösung wenigstens einem Titansalz der Gruppe, bestehend aus Alkoxid, Nitrat, Sulfat, Phosphat, Perchlorat sowie Titanhalogeniden, Titandioxid und Titansilikaten entspricht.

6. Verfahren nach den Ansprüchen 1 bis 5, dadurch **gekennzeichnet**, daß die oxidierende Säure ausgewählt wird aus der Gruppe, bestehend aus Salpeter-, Perchlor- und Fluorsulfonsäure, allein genommen oder im Ge misch.

7. Verfahren nach den Ansprüchen 1 bis 6, dadurch **gekennzeichnet**, daß die Säure mit einer reduzierenden Mineral- oder organischen Säure gekoppelt ist, deren Redoxpotential niedriger oder gleich demjenigen des in saurer Lösung vorliegenden vierwertigen Titans ist.

8. Verfahren nach den Ansprüchen 1 bis 7, dadurch **gekennzeichnet**, daß die reduzierende Säure ausgewählt wird aus der Gruppe, bestehend aus Mineralsäuren wie Chlorwasserstoff-, Phosphor- und Carbonsäuren.

9. Verwendung des Verfahrens gemäß den Ansprüchen 1 bis 8 zur Herstellung aller Arten von Zeolithen mit ins Gitter eingelagertem Titan und vorzugsweise zur Herstellung von Faujasiten, β-Zeolithen, Mordeniten und Titan-EMT.

10. Zeolithe, erhalten durch Verwendung des Verfahrens gemäß den Ansprüchen 1 bis 9.

11. Verwendung der Zeolithe gemäß Anspruch 10 in der Zusammensetzung von Katalysatoren für schonende Oxidation.